# EUROPEAN PATENT SPECIFICATION

(11) **EP 3 470 710 B1**
(45) Date of publication and mention of the grant of the patent: **30.09.2020**
(21) Application number: 17810008.7
(22) Date of filing: 27.04.2017
(51) Int. Cl.: F16J 15/10, F02F 11/00

(54) **STRUCTURE FOR SEALING CYLINDER BLOCK AND CYLINDER HEAD**
STRUKTUR ZUR ABDICHTUNG EINES ZYLINDERBLOCKS UND ZYLINDERKOPFS
STRUCTURE POUR SCELLER UN BLOC-CYLINDRES ET UNE CULASSE

(30) Priority: 09.06.2016 JP 2016115760
(43) Date of publication of application: 17.04.2019
(73) Proprietor: NOK Corporation, Minato-ku Tokyo 105-8585 (JP)
(72) Inventor: ANZAI Takanori, Makinohara-shi Shizuoka 421-0532 (JP)
(74) Representative: TBK
(86) International application number: PCT/JP2017/016744
(87) International publication number: WO 2017/212826

(56) References cited:
- EP-A1- 0 038 057
- WO-A1-2004/109083
- US-A1- 2012 223 487

## Description

### TECHNICAL FIELD

The present invention relates to a structure for sealing a cylinder block and a cylinder head according to the preamble of claim 1. Specifically, the present invention relates to a structure for sealing a cylinder block and a cylinder head capable of reducing a fastening load so as to reduce counterforce and ensuring sealing properties of the periphery of a cylinder bore while implementing reduction in fastening rigidity.

### BACKGROUND

Conventionally, a cylinder head gasket has been disposed between a cylinder block and a cylinder head so that the periphery of a cylinder bore of an engine in an automobile and the like is sealed and leakage of combustion gas is prevented.

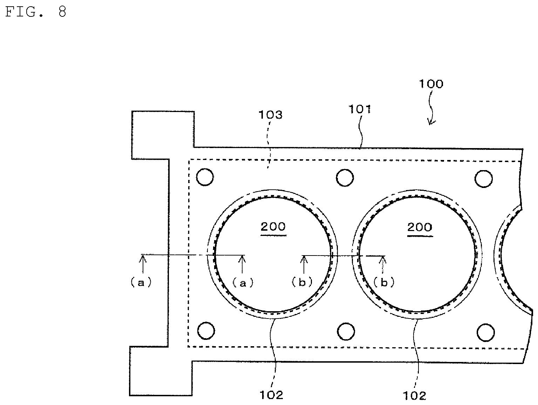

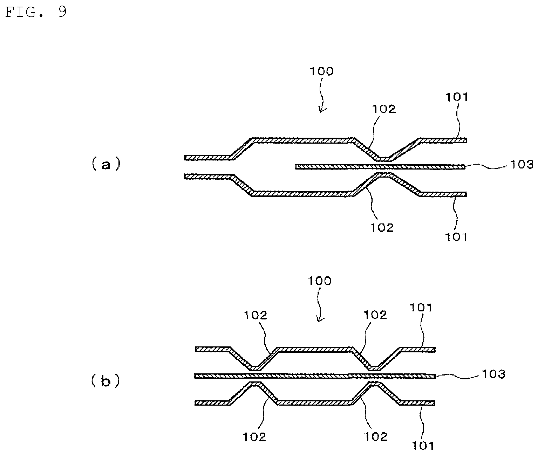

As illustrated in FIGS. 8 and 9, examples of this kind of cylinder head gasket include a cylinder head gasket 100 in which a plurality of metal plates 101 having beads 102 formed thereon are laminated with a sub plate(shim) 103 sandwiched therebetween (Patent Documents 1 and 2).

This cylinder head gasket 100 can enhance sealing pressure because the sub plate 103 sandwiched between the metal plates 101 enables a load to be concentrated on the periphery of a cylinder bore 200.

Patent Document 3 shows a generic structure according to the preamble of claim 1.

Patent Document 4 shows a further conventional structure.

### PRIOR ART DOCUMENTS

### PATENT DOCUMENTS

Patent Document 1: JP 2006 029381 A
Patent Document 2: JP 2012 036967 A
Patent Document 3: WO 2004/109 083 A1
Patent Document 4: EP 0 038 057 A1

### SAMMARY OF THE INVENTION

### PROBLEM TO BE SOLVED BY THE INVENTION

In recent years, a cylinder head gasket with reduced counterforce has been demanded. As counterforce of a cylinder head gasket is greater, a fastening load becomes greater at the time of fastening a cylinder block and a cylinder head, and bore deformation is more likely to occur. When bore deformation occurs, friction of a piston increases and fuel consumption of an engine is hardly saved.

However, in the conventional cylinder head gasket 100 illustrated in Figs. 8 and 9, not only sealing pressure due to counterforce of the beads 102 formed on the metal plates 101 but also the sub plate 103 sandwiched between the metal plates 101 form a stepped structure so as to enhance sealing pressure. Thus, a fastening load is greater and counterforce is greater accordingly.

Furthermore, a greater fastening load requires rigidity of counterpart surfaces (a cylinder block and a cylinder head), and fastening rigidity increases. Thus, weight increases and fuel consumption is hardly saved. When the counterpart surfaces are formed of an aluminum material, insufficient rigidity of the counterpart surfaces may cause bore deformation.

When a cylinder head gasket having no step without using a sub plate is used in order to reduce a fastening load and reduce counterforce, sealing pressure is lowered, and sealing properties of the periphery of a cylinder bore is unlikely to be sufficiently ensured.

An object of the present invention is to provide a structure for sealing a cylinder block and a cylinder head capable of reducing a fastening load so as to reduce counterforce, reducing weight due to reduction in fastening rigidity, and ensuring sealing properties of the periphery of a cylinder bore.

The object is achieved by a structure having the features of claim 1 or 5. Further advantageous developments of the present invention are set out in the respective dependent claims.

Other objects of the present invention are clearly described.

### MEANS FOR SOLVING PROBLEM

The above object is achieved by the following structures according to the invention and preferred structures.

The invention provides a structure for sealing a cylinder block and a cylinder head, wherein
a cylindrical part protrudes from an upper surface of the cylinder block including a cylinder bore so as to enclose the cylinder bore, and a circular recess having an inner diameter greater than an outer diameter of the cylindrical part is formed on a lower surface of the cylinder head that faces the upper surface of the cylinder block,
by mounting the cylinder head on the upper surface of the cylinder block, the cylindrical part is accommodated in the circular recess, and a gasket including an annular rubber elastic member is installed in a space formed between the outer side of the cylindrical part and the inner side of the circular recess, and
the gasket is compressed in a radial direction between an outer peripheral surface of the cylindrical part and an inner peripheral surface of the circular recess, and seals the periphery of the cylinder bore between the cylinder block and the cylinder head wherein
an upper end surface of the cylindrical part contacts an inner bottom surface of the circular recess.

Preferably, in the structure for sealing a cylinder block and a cylinder head, a thickness of the gasket in an axial direction compressed between the outer peripheral surface of the cylindrical part and the inner peripheral surface of the circular recess is equal to or less than a height of the space.

Preferably, in the structure for sealing a cylinder block and a cylinder head, the cylindrical part is formed with an upper end part of a sleeve that is installed in the cylinder bore.

Preferably, in the structure for sealing a cylinder block and a cylinder head, the inner peripheral surface of the circular recess has a tapered surface of a diameter which gradually increases toward the cylinder block.

The invention provides a structure for sealing a cylinder block and a cylinder head, wherein
a circular recess is formed on an upper surface of the cylinder block including a cylinder bore so as to enclose the cylinder bore, and a circular protrusion having an outer diameter less than an inner diameter of the circular recess is formed on a lower surface of the cylinder head that faces the upper surface of the cylinder block,
by mounting the cylinder head on the upper surface of the cylinder block, the circular protrusion is accommodated in the circular recess, and a gasket including an annular rubber elastic member is installed in a space formed between the inner side of the circular recess and the outer side of the circular protrusion, and
the gasket is compressed in a radial direction between an inner peripheral surface of the circular recess and an outer peripheral surface of the circular protrusion, and seals the periphery of the cylinder bore between the cylinder block and the cylinder head.

Preferably, in the structure for sealing a cylinder block and a cylinder , a thickness of the gasket in an axial direction compressed between the inner peripheral surface of the circular recess and the outer peripheral surface of the circular protrusion is equal to or less than a height of the space.

Preferably, in the structure for sealing a cylinder block and a cylinder head, the outer peripheral surface of the circular protrusion has a tapered surface a diameter of which gradually decreases toward the cylinder block.

### EFFECT OF THE INVENTION

The present invention provides a structure for sealing a cylinder block and a cylinder head capable of reducing a fastening load so as to reduce counterforce, reducing weight due to reduction in fastening rigidity, and ensuring sealing properties of the periphery of a cylinder bore.

### BRIEF DESCRIPTION OF DRAWINGS

FIG. 1 is a plan view illustrating a structure for sealing a cylinder block and a cylinder head according to an embodiment of the present invention;
FIG. 2 is an enlarged cross-sectional view along line ii-ii in FIG. 1;
FIG. 3 is a perspective view illustrating an example of a gasket that is partially broken;
FIG. 4 is a cross-sectional view illustrating a main part of the structure for sealing a cylinder block and a cylinder head according to another embodiment of the present invention;
FIG. 5 is a cross-sectional view illustrating the structure for sealing a cylinder block and a cylinder head according to another embodiment of the present invention;
FIGS. 6A and 6B are cross-sectional views illustrating a main part of the structure for sealing a cylinder block and a cylinder head according to another embodiment of the present invention;
FIG. 7 is a cross-sectional view illustrating the structure for sealing a cylinder block and a cylinder head according to another embodiment of the present invention;
FIG. 8 is a plan view illustrating the conventional cylinder head gasket; and
FIG. 9A is an enlarged cross-sectional view along line a-a in FIG. 8, and FIG. 9B is an enlarged cross-sectional view along line b-b in FIG. 8.

### DESCRIPTION OF THE PREFERRED EMBODIMENTS

Embodiments according to the present invention will now be described with reference to the accompanying drawings.

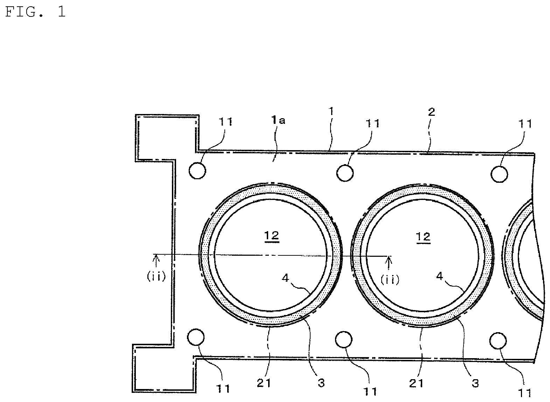

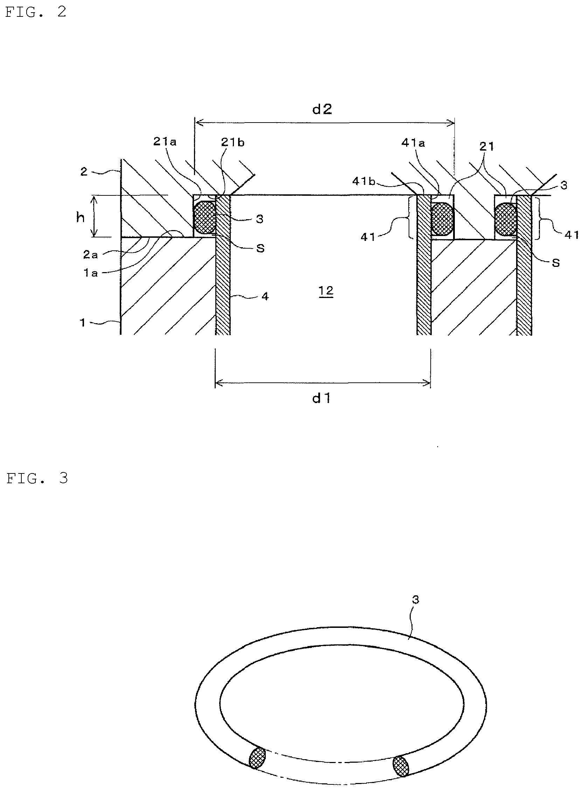

FIG. 1 is a plan view illustrating a structure for sealing a cylinder block and a cylinder head according to an embodiment of the present invention. FIG. 2 is an enlarged cross-sectional view along line ii-ii in FIG. 1. FIG. 3 is a perspective view illustrating an example of a gasket that is partially broken.

In FIG. 1, the cylinder block and the cylinder head are indicated by a solid line and a dot-and-dash line, respectively.

Generally, in the cylinder block, a water jacket in which cooling water flows is formed, but, in the cylinder block of the respective embodiments described below, the water jacket is not illustrated and only a main part related to the present invention is illustrated and described.

A cylinder head 2 is placed on an upper surface 1a of a cylinder block 1 with a gasket 3 sandwiched therebetween, and is integrally fastened to the cylinder block 1 by unillustrated bolts that are inserted in bolt holes 11 across the cylinder block 1 and the cylinder head 2.

The cylinder block 1 include cylinder bores 12. Each of the cylinder bores 12 forms a combustion chamber of an engine, and has an unillustrated piston slidably disposed therein. In the cylinder bore 12, a cylindrical sleeve 4 is installed to improve wear resistance to piston sliding. The inner periphery of the cylinder bore 12 is formed with the inner periphery of the sleeve 4.

An upper end part of the sleeve 4 vertically protrudes from the upper surface 1a of the cylinder block 1 to a predetermined height. A cylindrical part 41 formed with the upper end part of the sleeve 4 protrudes concentrically with the cylinder bore 12 so as to enclose the cylinder bore 12 from the upper surface 1a of the cylinder block 1.

This cylindrical part 41 is formed by difference in height between an upper end surface 41b of the sleeve 4 and the upper surface 1a of the cylinder block 1. The cylindrical part 41 may be formed by extending the upper end part of the sleeve 4 by a predetermined height, and may be formed by recessing (shaving) the upper surface 1a of the cylinder block 1 on the outer side of the sleeve 4 at a predetermined depth.

By contrast, on a lower surface 2a of the cylinder head 2 facing the upper surface 1a of the cylinder block 1, a circular recess 21 is formed. This circular recess 21 has a shape where a part corresponding to the cylinder bore 12 is vertically recessed from the lower surface 2a of the cylinder head 2 to a predetermined depth concentrically with the cylinder bore 12.

This circular recess 21 is formed by difference in height between an inner bottom surface 21b of the circular recess 21 and the lower surface 2a of the cylinder head 2. The circular recess 21 may be formed by recessing (shaving) the lower surface 2a of the cylinder head 2 concentrically with the cylinder bore 12. For example, a plate member (not illustrated) in a predetermined thickness having an opening slightly greater than that of the cylinder bore 12 is fixed to the cylinder head 2, and the circular recess 21 may be that opening.

An outer diameter d1 of the cylindrical part 41 of the cylinder block 1 is less than an inner diameter d2 of the circular recess 21 of the cylinder head 2. As illustrated in FIG. 2, when the cylinder head 2 is placed on the cylinder block 1, the cylindrical part 41 of the cylinder block 1 is accommodated in the circular recess 21 of the cylinder head 2. Difference between the d1 and the d2 forms an annular space S between the outer side of the cylindrical part 41 and the inner side of the circular recess 21. This space S is enclosed by an outer peripheral surface 41a of the cylindrical part 41, an inner peripheral surface 21a of the circular recess 21, the upper surface 1a of the cylinder block 1, and the inner bottom surface 21b of the circular recess 21, and has the gasket 3 mounted therein.

As illustrated in FIG. 3, the gasket 3 is shaped in an annulus formed of a rubbery elastic material (a rubber material or a synthetic resin material having rubbery elasticity) having heat resistance. The gasket 3 described in the embodiment has a circular cross-section as an example, but a cross-section of the gasket 3 is not limiting.

An inner diameter of the gasket 3 in a non-compressed state is made slightly less than the outer diameter d1 of the cylindrical part 41 of the cylinder block 1. Thus, an inner periphery side of the gasket 3 is close to the outer peripheral surface 41a of the cylindrical part 41.

As illustrated in FIG. 2, an outer diameter of the gasket 3 that is mounted on the outer peripheral surface 41a of the cylindrical part 41 is made slightly greater than the inner diameter d2 of the circular recess 21 of the cylinder head 2. Thus, an outer periphery side of the gasket 3 is pressed in a radial direction by the inner peripheral surface 21a of the circular recess 21.

In this manner, the gasket 3 is sandwiched between the outer peripheral surface 41a of the cylindrical part 41 and the inner peripheral surface 21a of the circular recess 21 so as to be in a compressed state in a radial direction, and forms what is called a side surface sealing close to the outer peripheral surface 41a and the inner peripheral surface 21a. Even when combustion gas intrudes from the cylinder bore 12 between the cylinder block 1 and the cylinder head 2, a sealing part among the gasket 3, the outer peripheral surface 41a, and the inner peripheral surface 21a prevents further leakage. Thus, the gasket 3 surely seals the periphery of the cylinder bore 12 between the cylinder block 1 and the cylinder head 2.

In this sealing structure, there is no need to compress beads formed on a metal plate and to sandwich a gasket that has a stepped structure using a sub plate for enhancing sealing pressure unlike a conventional manner, and the periphery of the cylinder bore 12 can be surely sealed. Because a load at the time of placing the cylinder head 2 on the cylinder block 1 and compressing the gasket 3 formed of a rubbery elastic material in a radial direction is extremely less as compared with a case where beads formed on a metal plate is compressed, a fastening load can be significantly reduced. Thus, counterforce can be reduced and fastening rigidity can be reduced.

Reduction in fastening rigidity can reduce rigidity of the cylinder block 1 and the cylinder head 2, the size, the number, and the like of bolts, and reduce weight of an engine. Furthermore, reduction in fastening rigidity can prevent bore deformation, thereby achieving reduction in oil consumption amount and saving of fuel consumption due to low friction.

When the gasket 3 is compressed between the outer peripheral surface 41a of the cylindrical part 41 and the inner peripheral surface 21a of the circular recess 21 in a radial direction, elastic deformation causes thickness of the gasket 3 in an axial direction (vertical direction in FIG. 2) to be increased. At this time, as illustrated in FIG. 2, it is preferable that thickness of the gasket 3 in an axial direction compressed in a radial direction in the space S be equal to or less than a height h of the space S. The height h of the space S is a distance between the upper surface 1a of the cylinder block 1 and the inner bottom surface 21b of the circular recess 21 of the cylinder head 2.

In this manner, the gasket 3 is not compressed between the upper surface 1a of the cylinder block 1 and the inner bottom surface 21b of the circular recess 21 of the cylinder head 2, thereby reducing an axial force at the time of fastening with bolts. Thus, a fastening load can be further reduced, and counterforce and fastening rigidity can be further reduced.

As illustrated in FIG. 2, the upper end surface 41b of the cylindrical part 41 of the cylinder block 1 contacts the inner bottom surface 21b of the circular recess 21 of the cylinder head 2. It is preferable that this contact part be coated with molybdenum (Mo) and the like for improving sealing properties (reducing attack of combustion gas to the gasket 3).

As illustrated in FIG. 2, the upper surface 1a of the cylinder block 1 and the lower surface 2a of the cylinder head 2 directly contact (metal touch) each other. This contact makes direct heat conduction between the cylinder block 1 and the cylinder head 2 possible, and can reduce difference in heat expansion caused by difference in temperature between them.

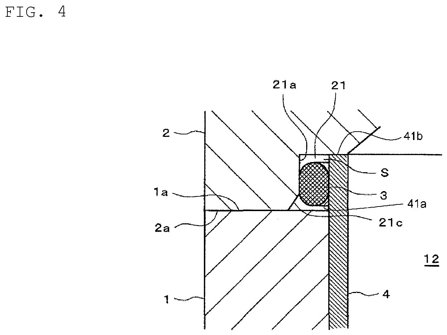

As illustrated in FIG. 4, the inner peripheral surface 21a of the circular recess 21 of the cylinder head 2 can have a tapered surface 21c the diameter of which gradually increases toward the cylinder block 1. When the cylinder head 2 is placed on the cylinder block 1 where the gasket 3 is preliminarily mounted on the outer peripheral surface 41a of the cylindrical part 41, this tapered surface can prevent the gasket 3 from being sandwiched between the upper surface 1a of the cylinder block 1 and the lower surface 2a of the cylinder head 2, and workability can be more improved when the gasket 3 forms a side surface sealing with the inner peripheral surface 21a of the circular recess 21.

In the example illustrated in FIG. 4, the tapered surface 21c is formed at only end part of the inner peripheral surface 21a of the circular recess 21 on the cylinder block 1 side, but all surfaces of the inner peripheral surface 21a may be tapered surfaces.

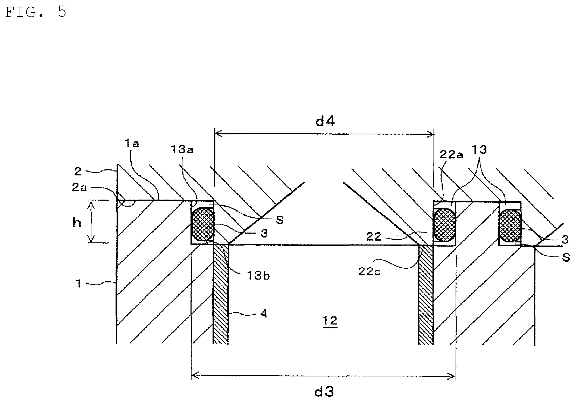

In the embodiment described above, the outer peripheral surface 41a on which the gasket 3 is mounted is formed on the cylinder block 1 and the inner peripheral surface 21a on which the gasket 3 is compressed in a radial direction is formed on the cylinder head 2, but the forming may be reversed as illustrated in FIG. 5.

In FIG. 5, on the upper surface 1a of the cylinder block 1, a circular recess 13 concentric with the cylinder bore 12 is formed so as to enclose the cylinder bore 12. This circular recess 13 has a shape where an area including therein the cylinder bore 12 is vertically recessed from the upper surface 1a of the cylinder block 1 to a predetermined depth. Thus, the cylinder bore 12 is open to the center of an inner bottom surface 13b of the circular recess 13.

This circular recess 13 is formed by difference in height between the inner bottom surface 13b of the circular recess 13 and the upper surface 1a of the cylinder block 1. The circular recess 13 may be formed by recessing (shaving) the upper surface 1a of the cylinder block 1 concentrically with the cylinder bore 12. For example, a plate member (not illustrated) in a predetermined thickness having an opening slightly greater than that of the cylinder bore 12 is fixed to the cylinder block 1, and the circular recess 13 may be that opening.

By contrast, on the lower surface 2a of the cylinder head 2, a circular protrusion 22 is formed. This circular protrusion 22 has a shape that vertically protrudes from the lower surface 2a of the cylinder head 2 toward the cylinder block 1 at a predetermined height concentrically with the cylinder bore 12.

The circular protrusion 22 is also formed by difference in height between a lower end surface 22c of the circular protrusion 22 and the lower surface 2a of the cylinder head 2. The circular protrusion 22 may be formed by recessing (shaving) the lower surface 2a of the cylinder head 2 corresponding to the outer side of the cylinder bore 12 to a predetermined depth. For example, an annular member (not illustrated) in a predetermined thickness is fixed to the lower surface 2a of the cylinder head 2 concentrically with the cylinder bore 12, and the circular protrusion 22 may be protrudingly formed.

An inner diameter d3 of the circular recess 13 of the cylinder block 1 is made greater than an outer diameter d4 of the circular protrusion 22 of the cylinder head 2. When the cylinder head 2 is placed on the cylinder block 1, the circular protrusion 22 of the cylinder head 2 is accommodated in the circular recess 13 of the cylinder block 1. Difference between the d3 and d4 forms the annular space S between the inner side of the circular recess 13 and the outer side of the circular protrusion 22. This space S is enclosed by an inner peripheral surface 13a of the circular recess 13, an outer peripheral surface 22a of the circular protrusion 22, the inner bottom surface 13b of the circular recess 13, and the lower surface 2a of the cylinder head 2, and has the gasket 3 mounted therein.

At this time, the inner diameter of the gasket 3 in a non-compressed state is made slightly less than the outer diameter d4 of the circular protrusion 22 of the cylinder head 2. Thus, the inner periphery side of the gasket 3 is close to the outer peripheral surface 22a of the circular protrusion 22.

The outer diameter of the gasket 3 that is mounted on the outer peripheral surface 22a of the circular protrusion 22 is made slightly greater than the inner diameter d3 of the circular recess 13 of the cylinder block 1. Thus, the outer periphery side of the gasket 3 is pressed in a radial direction by the inner peripheral surface 13a of the circular recess 13.

In this manner, the gasket 3 is sandwiched between the inner peripheral surface 13a of the circular recess 13 and the outer peripheral surface 22a of the circular protrusion 22 so as to be in a compressed state in a radial direction, and forms a side surface sealing close to the inner peripheral surface 13a and the outer peripheral surface 22a. This sealing structure also causes the gasket 3 to surely seal the periphery of the cylinder bore 12 between the cylinder block 1 and the cylinder head 2, and can obtain the same effects as those of the embodiment described above.

In this embodiment, it is preferable that thickness of the gasket 3 in an axial direction (vertical direction in FIG. 5) compressed between the inner peripheral surface 13a of the circular recess 13 and the outer peripheral surface 22a of the circular protrusion 22 be equal to or less than the height h of the space S. At this time, the height h of the space S is a distance between the inner bottom surface 13b of the circular recess 13 of the cylinder block 1 and the lower surface 2a of the cylinder head 2.

In this manner, the gasket 3 is not compressed between the inner bottom surface 13b of the circular recess 13 of the cylinder block 1 and the lower surface 2a of the cylinder head 2, thereby reducing an axial force at the time of fastening with bolts similarly to the embodiment described above.

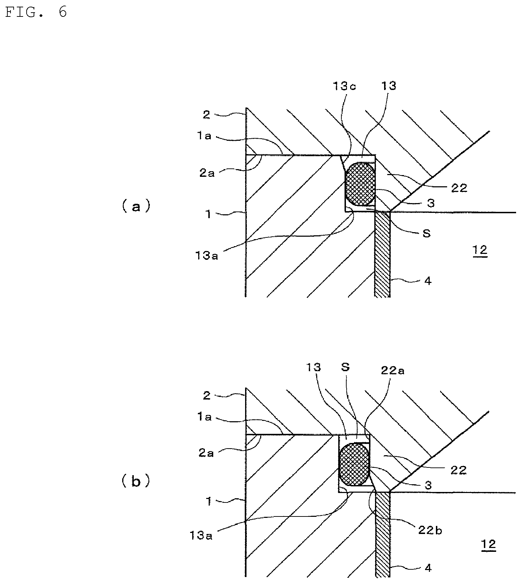

In this embodiment, in order to further improve workability when the gasket 3 forms a side surface sealing, a tapered surface 13c the diameter of which gradually increases toward the cylinder head 2 may be formed on the inner peripheral surface 13a of the circular recess 13 of the cylinder block 1 as illustrated in FIG. 6A. A tapered surface 22b the diameter of which gradually decreases toward the cylinder block 1 may be formed on the outer peripheral surface 22a of the circular protrusion 22 of the cylinder head 2 as illustrated in FIG. 6B.

The case in FIG. 6A can be applied to the case where the gasket 3 is preliminarily mounted on the outer peripheral surface 22a of the circular protrusion 22 of the cylinder head 2 at the time of placing the cylinder head 2 on the cylinder block 1. The case in FIG. 6B can be applied to the case where the gasket 3 is preliminarily installed in the circular recess 13 of the cylinder block 1. These tapered surfaces 13c and 22b may be formed on all surfaces of the inner peripheral surface 13a of the circular recess 13 and the outer peripheral surface 22a of the circular protrusion 22, respectively.

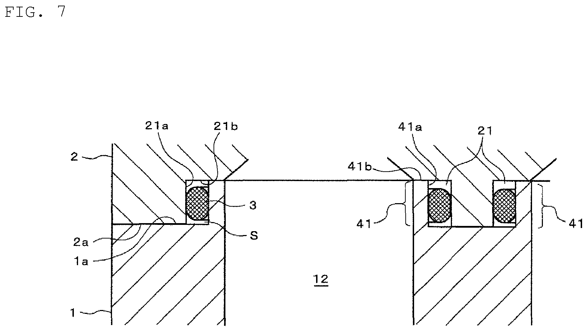

In each of the embodiments described above, the sleeve 4 is installed in the cylinder bore 12 as an example, but the sleeve 4 is not necessarily mounted. In the case of the cylinder block 1 including no sleeve 4, in order to form the same cylindrical part 41 as that in FIG. 2, a part cylindrically protruding in the periphery of the cylinder bore 12 of the cylinder block 1 may be formed as illustrated in FIG. 7.

In this case, the cylindrical part 41 may be formed by recessing (shaving) the upper surface 1a of the cylinder block 1 in the periphery of a cylinder bore 12 concentrically with the cylinder bore 12. For example, the cylindrical part 41 may be formed by fixing a cylindrical member formed independently of the cylinder block 1 to the upper surface 1a of the cylinder block 1 concentrically with the cylinder bore 12.

In each of the embodiments described above, the one gasket 3 is installed in the one space S as an example, but, in order to obtain surer sealing properties, the plurality of gaskets 3, which are not illustrated, may be installed in the one space S so that the gaskets 3 are laminated in an axial direction.

### EXPLANATIONS OF LETTERS OR NUMERALS

- 1: Cylinder block
- 1a: Upper surface
11 Bolt hole
12 Cylinder bore
13 Circular recess
13a Inner peripheral surface
13b Inner bottom surface
13c Tapered surface
- 2: Cylinder head
- 2a: Lower surface
21 Circular recess
21a Inner peripheral surface
21b Inner bottom surface
22 Circular protrusion
22a Outer peripheral surface
22b Tapered surface
22c Lower end surface
- 3: Gasket
- 4: Sleeve
41 Cylindrical part
41a Outer peripheral surface
41b Upper end surface
- S: Space

## Claims

1. A structure for sealing a cylinder block (1) and a cylinder head (2), wherein
a cylindrical part (41) protrudes from an upper surface (1a) of the cylinder block (1) including a cylinder bore (12) so as to enclose the cylinder bore (12), and a circular recess (21) having an inner diameter (d2) greater than an outer diameter (d1) of the cylindrical part (41) is formed on a lower surface (2a) of the cylinder head (2) that faces the upper surface (1a) of the cylinder block (1),
by mounting the cylinder head (2) on the upper surface (1a) of the cylinder block (1), the cylindrical part (41) is accommodated in the circular recess (21), and a gasket (3) including an annular rubber elastic member is installed in a space (S) formed between the outer side of the cylindrical part (41) and the inner side of the circular recess (21), and
the gasket (3) is compressed in a radial direction between an outer peripheral surface (41a) of the cylindrical part (41) and an inner peripheral surface (21a) of the circular recess (21), and seals the periphery of the cylinder bore (12) between the cylinder block (1) and the cylinder head (2), **characterized in that**
an upper end surface (41b) of the cylindrical part (41) contacts an inner bottom surface (21b) of the circular recess (21).

2. The structure for sealing a cylinder block (1) and a cylinder head (2) according to claim 1, wherein thickness of the gasket (3) in an axial direction compressed between the outer peripheral surface (41a) of the cylindrical part (41) and the inner peripheral surface (21a) of the circular recess (21) is equal to or less than a height (h) of the space (S).

3. The structure for sealing a cylinder block (1) and a cylinder head (2) according to claim 1 or 2, wherein the cylindrical part (41) is formed with an upper end part of a sleeve (4) that is installed in the cylinder bore (12).

4. The structure for sealing a cylinder block (1) and a cylinder head (2) according to claim 1, 2, or 3, wherein the inner peripheral surface (21a) of the circular recess (21) has a tapered surface (22c) of a diameter which gradually increases toward the cylinder block (1).

5. A structure for sealing a cylinder block (1) and a cylinder head (2), **characterised in that**,
a circular recess (13) is formed on an upper surface (1a) of the cylinder block (1) including a cylinder bore (12) so as to enclose the cylinder bore (12), and a circular protrusion (22) having an outer diameter (d4) less than an inner diameter (d3) of the circular recess (13) is formed on a lower surface (2a) of the cylinder head (2) that faces the upper surface (1a) of the cylinder block (1),
by mounting the cylinder head (2) on the upper surface (1a) of the cylinder block (1), the circular protrusion (22) is accommodated in the circular recess (13), and a gasket (3) including an annular rubber elastic member is installed in a space (S) formed between the inner side of the circular recess (13) and the outer side of the circular protrusion (22), and
the gasket (3) is compressed in a radial direction between an inner peripheral surface (13a) of the circular recess (13) and an outer peripheral surface (22a) of the circular protrusion (22), and seals the periphery of the cylinder bore (12) between the cylinder block (1) and the cylinder head (2).

6. The structure for sealing a cylinder block (1) and a cylinder head (2) according to claim 5, wherein thickness of the gasket in an axial direction compressed between the inner peripheral surface (13a) of the circular recess (13) and the outer peripheral surface (22a) of the circular protrusion (22) is equal to or less than a height (h) of the space (S).

7. The structure for sealing a cylinder block (1) and a cylinder head (2) according to claim 5 or 6, wherein the outer peripheral surface (22a) of the circular protrusion (22) has a tapered surface (22b) a diameter of which gradually decreases toward the cylinder block (1).

## Patentansprüche

1. Struktur zum Abdichten eines Zylinderblocks (1) und eines Zylinderkopfs (2), wobei
ein zylindrischer Abschnitt (41) aus einer oberen Fläche (1a) des Zylinderblocks (1) vorsteht, der eine Zylinderbohrung (12) umfasst, um die Zylinderbohrung (12) zu umschließen, und eine kreisförmige Vertiefung (21), die einen Innendurchmesser (d2) hat, der größer ist als ein Außendurchmesser (d1) des zylindrischen Abschnitts (41) auf einer unteren Fläche (2a) des Zylinderkopfs (2) ausgebildet ist, die der oberen Fläche (1a) des Zylinderblocks (1) gegenüberliegt,
durch Montieren des Zylinderkopfs (2) auf die obere Fläche (1a) des Zylinderblocks (1) der zylindrische Abschnitt (41) in der kreisförmigen Vertiefung (21) aufgenommen ist und eine Dichtung (3), die ein ringförmiges elastisches Gummielement umfasst, in einem Raum (S) installiert ist, der zwischen der Außenseite des zylindrischen Abschnitts (41) und der Innenseite der kreisförmigen Vertiefung (21) ausgebildet ist, und
die Dichtung (3) in einer radialen Richtung zwischen einer Außenumfangsfläche (41a) des zylindrischen Abschnitts (41) und einer Innenumfangsfläche (21a) der kreisförmigen Vertiefung (21) komprimiert ist und den Umfang der Zylinderbohrung (12) zwischen dem Zylinderblock (1) und dem Zylinderkopf (2) abdichtet, **dadurch gekennzeichnet, dass**
eine obere Stirnfläche (41b) des zylindrischen Abschnitts (41) eine Innenbodenfläche (21b) der kreisförmigen Vertiefung (21) berührt.

2. Struktur zum Abdichten eines Zylinderblocks (1) und eines Zylinderkopfs (2) nach Anspruch 1, wobei eine Dicke der Dichtung (3) in einer axialen Richtung, die zwischen der Außenumfangsfläche (41a) des zylindrischen Abschnitts (41) und der Innenumfangsfläche (21a) der kreisförmigen Vertiefung (21) komprimiert ist, gleich wie oder kleiner als eine Höhe (h) des Raumes (S) ist.

3. Struktur zum Abdichten eines Zylinderblocks (1) und eines Zylinderkopfs (2) nach Anspruch 1 oder 2, wobei der zylindrische Abschnitt (41) mit einem oberen Endabschnitt einer Hülse (4), die in der Zylinderbohrung (12) installiert ist, ausgebildet ist.

4. Struktur zum Abdichten eines Zylinderblocks (1) und eines Zylinderkopfs (2) nach Anspruch 1, 2 oder 3, wobei die Innenumfangsfläche (21a) der kreisförmigen Vertiefung (21) eine konische Fläche (22c) aus einem Durchmesser hat, der sich in Richtung des Zylinderblocks (1) allmählich erhöht.

5. Struktur zum Abdichten eines Zylinderblocks (1) und eines Zylinderkopfs (2), **dadurch gekennzeichnet, dass**
eine kreisförmige Vertiefung (13) auf einer oberen Fläche (1a) des Zylinderblocks (1), der eine Zylinderbohrung (12) umfasst, ausgebildet ist, um die Zylinderbohrung (12) zu umschließen, und ein kreisförmiger Vorsprung (22), der einen Außendurchmesser (d4) hat, der kleiner als ein Innendurchmesser (d3) der kreisförmigen Vertiefung (13) ist, auf einer unteren Fläche (2a) des Zylinderkopfs (2) ausgebildet ist, die der oberen Fläche (1a) des Zylinderblocks (1) gegenüberliegt,
durch Montieren des Zylinderkopfs (2) auf die obere Fläche (1a) des Zylinderblocks (1) der kreisförmige Vorsprung (22) in der kreisförmigen Vertiefung (13) aufgenommen ist und eine Dichtung (3), die ein ringförmiges elastisches Gummielement umfasst, in einem Raum (S) installiert ist, der zwischen der Innenseite der kreisförmigen Vertiefung (13) und der Außenseite des kreisförmigen Vorsprungs (22) ausgebildet ist, und
die Dichtung (3) in einer radialen Richtung zwischen einer Innenumfangsfläche (13a) der kreisförmigen Vertiefung (13) und einer Außenumfangsfläche (22a) des kreisförmigen Vorsprungs (22) komprimiert ist und den Umfang der Zylinderbohrung (12) zwischen dem Zylinderblock (1) und dem Zylinderkopf (2) abdichtet.

6. Struktur zum Abdichten eines Zylinderblocks (1) und eines Zylinderkopfs (2) nach Anspruch 5, wobei eine Dicke der Dichtung in einer axialen Richtung, die zwischen der Innenumfangsfläche (13a) der kreisförmigen Vertiefung (13) und der Außenumfangsfläche (22a) des kreisförmigen Vorsprungs (22) komprimiert ist, gleich wie oder kleiner als eine Höhe (h) des Raumes (S) ist.

7. Struktur zum Abdichten eines Zylinderblocks (1) und eines Zylinderkopfs (2) nach Anspruch 5 oder 6, wobei die Außenumfangsfläche (22a) des kreisförmigen Vorsprungs (22) eine konische Fläche (22b) hat, deren Durchmesser sich in Richtung des Zylinderblocks (1) allmählich verringert.

## Revendications

1. Structure pour sceller un bloc-cylindres (1) et une culasse (2), dans laquelle :
une partie cylindrique (41) fait saillie d'une surface supérieure (1a) du bloc-cylindres (1) comprenant un alésage de cylindre (12) afin d'enfermer l'alésage de cylindre (12) et un évidement circulaire (21) ayant un diamètre interne (d2) supérieur à un diamètre externe (d1) de la partie cylindrique (41) est formé sur une surface inférieure (2a) de la culasse (2) qui fait face à la surface supérieure (1a) du bloc-cylindres (1),
en montant la culasse (2) sur la surface supérieure (1a) du bloc-cylindres (1), la partie cylindrique (41) est logée dans l'évidement circulaire (21), et un joint (3) comprenant un élément élastique en caoutchouc annulaire est installé dans un espace (S) formé entre le côté externe de la partie cylindrique (41) et le côté interne de l'évidement circulaire (21), et
le joint (3) est comprimé dans une direction radiale entre une surface périphérique externe (41a) de la partie cylindrique (41) et une surface périphérique interne (21a) de l'évidement circulaire (21) et scelle la périphérie de l'alésage de cylindre (12) entre le bloc-cylindres (1) et la culasse (2), **caractérisé en ce que** :
une surface d'extrémité supérieure (41b) de la partie cylindrique (41) est en contact avec une surface inférieure interne (21b) de l'évidement circulaire (21).

2. Structure pour sceller un bloc-cylindres (1) et une culasse (2) selon la revendication 1, dans laquelle l'épaisseur du joint (3) dans une direction axiale comprimé entre la surface périphérique externe (41a) de la partie cylindrique (41) et la surface périphérique interne (21a) de l'évidement circulaire (21) est égale ou inférieure à une hauteur (h) de l'espace (S).

3. Structure pour sceller un bloc-cylindres (1) et une culasse (2) selon la revendication 1 ou 2, dans lequel la partie cylindrique (41) est formée avec une partie d'extrémité supérieure d'un manchon (4) qui est installé dans l'alésage de cylindre (12).

4. Structure pour sceller un bloc-cylindres (1) et une culasse (2) selon la revendication 1, 2 ou 3, dans laquelle la surface périphérique interne (21a) de l'évidement circulaire (21) a une surface progressivement rétrécie (22c) d'un diamètre qui augmente progressivement vers le bloc-cylindres (1).

5. Structure pour sceller un bloc-cylindres (1) et une culasse (2) **caractérisée en ce que** :
un évidement circulaire (13) est formé sur une surface supérieure (1a) du bloc-cylindres (1) comprenant un alésage de cylindre (12) afin d'enfermer l'alésage de cylindre ((12), et une saillie circulaire (22) ayant un diamètre externe (d4) inférieur à un diamètre interne (d3) de l'évidement circulaire (13) est formée sur une surface inférieure (2a) de la culasse (2) qui fait face à la surface supérieure (1a) du bloc-cylindres (1),
en montant la culasse (2) sur la surface supérieure (1a) du bloc-cylindres (1), la saillie circulaire (22) est logée dans l'évidement circulaire (13) et un joint (3) comprenant un élément élastique en caoutchouc annulaire est installé dans un espace (S) formé entre le côté interne de l'évidement circulaire (13) et le côté externe de la saillie circulaire (22), et
le joint (3) est comprimé dans une direction radiale entre une surface périphérique interne (13a) de l'évidement circulaire (13) et une surface périphérique externe (22a) de la saillie circulaire (22) et scelle la périphérie de l'alésage de cylindre (12) entre le bloc-cylindres (1) et la culasse (2).

6. Structure pour sceller un bloc-cylindres (1) et une culasse (2) selon la revendication 5, dans laquelle l'épaisseur du joint dans une direction axiale comprimé entre la surface périphérique interne (13a) de l'évidement circulaire (13) et la surface périphérique externe (22a) de la saillie circulaire (22) est égale ou inférieure à une hauteur (h) de l'espace (S).

7. Structure pour sceller un bloc-cylindres (1) et une culasse (2) selon la revendication 5 ou 6, dans laquelle la surface périphérique externe (22a) de la saillie circulaire (22) a une surface progressivement rétrécie (22b) dont un diamètre diminue progressivement vers le bloc-cylindres (1).
